# FASCICULE DE BREVET EUROPEEN

(11) **EP 0 922 555 B1**
(45) Date de publication et mention de la délivrance du brevet: **23.01.2002**
(21) Numéro de dépôt: 98402609.6
(22) Date de dépôt: 20.10.1998
(51) Int. Cl.: B29C 45/14, B65D 25/20

(54) **Procédé de moulage pour réaliser une pièce en matière plastique munie sur une surface d'un élément rapporté de faible épaisseur, et pièce ainsi réalisée**
Formverfahren zur Herstellung eines Kunststoffgegenstandes versehen auf einer Oberfläche mit einem Einsatz geringer Dicke und so hergestellter Gegenstand
Moulding method for producing a plastic article provided on a surface with an insert of small thickness and article produced in this way

(30) Priorité: 24.10.1997 FR 9713364
(43) Date de publication de la demande: 16.06.1999
(73) Titulaire: Allibert Equipement, 92000 Nanterre (FR)
(72) Inventeur: Auzou, André, Saint-Aubin-sur-Gaillon, 27600 Gaillon (FR)
(74) Mandataire: Lerner, François

(56) Documents cités:
- EP-A- 0 322 285
- EP-A- 0 521 343
- WO-A-93/24381
- WO-A-96/11098
- FR-A- 2 301 357
- FR-A- 2 760 998
- GB-A- 2 259 884
- NL-A- 9 400 402
- US-A- 3 302 824
- PATENT ABSTRACTS OF JAPAN vol. 10, no. 2 (M-444), 8 janvier 1986 & JP 60 166516 A (KINUGAWA GOMU KOGYO KK), 29 août 1985
- PATENT ABSTRACTS OF JAPAN vol. 95, no. 6, 31 juillet 1995 & JP 07 081284 A (CASIO COMPUT CO LTD), 28 mars 1995

## Description

Le domaine de l'invention est celui des pièces moulées en matière(s) plastique(s) et des techniques de moulage de ces pièces.

On connaît déjà dans la technique différents procédés de moulage de telles pièces (rotomoulage, injection sous pression, injection-compression, extrusion-soufflage...) et avec ces techniques, différentes pièces peuvent être fabriquées (bac, palette, caisse, cagette, poubelles ...).

Dans ce domaine, l'invention s'est attachée à trouver une solution au problème de rapporter, en un endroit donné de la pièce, un élément de faible épaisseur par rapport à une au moins de ses autres dimensions, en évitant que l'élément puisse inopinément se détacher ou être arraché trop aisément de la pièce, tout en proposant une technique de mise en place de l'élément qui soit économique, rapide, efficace et fiable.

Par élément de faible épaisseur par rapport à ses autres dimensions, on comprendra qu'il s'agit d'une pièce telle qu'une étiquette (électronique ou non) de quelques dixièmes de millimètres à quelques millimètres d'épaisseur, ses autres dimensions étant au moins cinq fois plus importantes, et de préférence au moins vingt-cinq fois, voire cinquante fois, dans au moins une direction perpendiculaire à ladite épaisseur (largeur ou longueur).

C'est ainsi que l'invention concerne plus particulièrement un procédé de moulage pour réaliser une pièce en matière plastique munie sur une surface d'un élément rapporté au moins en partie en matière plastique compatible avec celle de la pièce pour se souder avec elle lors du moulage, cet élément présentant une faible épaisseur relativement à une au moins de ses autres dimensions, le procédé comprenant les étapes suivantes :
a) on dispose et on maintient l'élément à rapporter en regard d'une zone déterminée de la paroi d'une cavité de moulage pour empêcher qu'il ne se déplace lors du moulage, et on referme le moule,
b) on introduit de la matière plastique dans la cavité de moulage pour réaliser la pièce, et on conduit le moulage pour souder cette matière plastique de constitution de la pièce avec une partie au moins de celle de l'élément,
c) on laisse refroidir la matière plastique à l'intérieur du moule,
d) on démoule la pièce et l'élément rapporté soudé à elle.

Un tel procédé est connu par exemple du document FR-A-75 05 732.

Ainsi, on évite de venir fixer l'élément une fois le moulage de la pièce terminé, par exemple à l'aide d'un rivet, et on s'exonère des contraintes liées aux reprises de pièces après fabrication qui sont longues et coûteuses.

Dans le but d'empêcher l'accumulation de gaz entre l'élément à rapporter et la paroi de la pièce, la solution selon la présente invention propose de réaliser au moins un orifice dans l'épaisseur dudit élément et d'apporter, dans l'étape b), la matière de constitution de la pièce jusque dans cet orifice. Cette solution a aussi pour avantage de mieux maintenir l'élément contre la pièce finie (meilleure intégration) en favorisant le soudage (ou la fusion partielle) entre les matières en présence, et évite que l'élément se déforme en "gonflant" et risque de se casser (en particulier lors du lavage de la pièce) ou d'empêcher par exemple la lecture à travers lui d'un code barres.

Ainsi, l'élément rapporté sera pourvu d'au moins un orifice à travers lequel la matière plastique de constitution de ladite pièce sera visible.

Outre ce procédé, l'invention propose également une pièce telle que définie dans la revendication indépendante 5.

Dans le cadre de la technique de moulage de l'invention, on s'est en outre attaché à réduire les temps et coûts de fabrication de la pièce en particulier en relation avec de possibles modifications à faire sur le moule pour "intégrer" l'élément rapporté.

Une mise en oeuvre de l'invention consiste à munir l'élément à rapporter d'un moyen intermédiaire amovible de fixation, propre à venir se fixer sur la paroi de la cavité de moulage, et dans l'étape a), à fixer ledit élément sur la paroi de la cavité de moulage à l'aide de ce moyen intermédiaire de fixation que l'on applique contre celle-ci.

Ainsi, on va pouvoir travailler en temps "masqué", c'est-à-dire pendant le cycle de fabrication, sans avoir à modifier le moule, suivant que l'on souhaite ou pas rapporter l'élément précité sur une pièce. De plus, en raison du fait que c'est l'élément lui-même qui porte le moyen intermédiaire de fixation contre la paroi de la cavité de moulage, on peut le placer n'importe où et dans la configuration que l'on veut (en particulier l'orientation dans le cas d'un code barres) contre cette paroi.

Si l'on souhaite fixer rapidement l'élément dans le moule, si l'on veut que cet élément tienne dans ce moule au moment où l'on va introduire la matière plastique dans le moule, et si l'on désire pouvoir le retirer facilement lors du démoulage de la pièce, la solution proposée est de maintenir l'élément à rapporter contre la paroi de la cavité de moulage à l'aide d'un matériau adhésif double face dont la force de collage du côté de l'élément à rapporter est supérieure à la force de collage du côté de la paroi de la cavité de moulage. Cette solution a aussi pour avantage qu'elle est peu coûteuse et efficace.

Il apparaît intéressant aujourd'hui, dans un certain nombre de cas, de pouvoir assurer la gestion des flux de transport et de stockage de certaines marchandises, ainsi que, si nécessaire, des pièces de manutention qui les transportent (bac, caisse, palette, conteneur). Ainsi, différents types de moyens peuvent être envisagés pour permettre l'identification et le suivi logistique d'un emballage et/ou du produit emballé. On peut citer à titre d'exemple les porte-étiquettes, les codes à barres, les microprocesseurs embarqués. Il est connu par exemple d'intégrer des puces électroniques au produit considéré. Ainsi, le brevet FR-A-2 697 801 prévoit d'équiper une palette d'une unité électronique de mémorisation et de restitution de données (transpondeur). Pour cela, il est prévu de remplir de produit moussant un pied creux de la palette, de réaliser un logement dans cette mousse, d'introduire l'unité et d'obturer l'accès audit logement. Cette solution s'avère, dans certains cas, difficile à mettre en oeuvre.

Ainsi, selon une autre considération de l'invention, si l'élément à rapporter est une unité électronique de traitement de données liée à un support de faible épaisseur par rapport à ses autres dimensions et réalisé en matière plastique compatible avec celle de la pièce, on disposera avantageusement, lors de l'étape a), l'élément précité contre la paroi de la cavité de moulage, de telle sorte que la face du support portant l'unité soit dirigée vers l'intérieur de ladite cavité. L'unité électronique de données est ainsi protégée derrière ou à l'intérieur du support, tout en restant accessible "électroniquement" à travers ce support, par exemple par transmission haute fréquence avec une unité externe d'acquisition et de transmission de données.

Dans ce cas on intégrera avantageusement l'unité de traitement électronique de données sur un support en matière plastique transparente ou translucide compatible avec celle(s) de la pièce. Ainsi, l'unité est protégée des agressions extérieures (détérioration, rayure, frottement, corrosion, humidité), tout en restant visible, en particulier si elle est munie de code à barres, d'inscriptions ou d'un écran du type à cristaux liquides.

Selon un autre aspect, la pièce pourra être une pièce de manutention comprenant un fond à partir duquel se dressent des parois latérales, cette pièce de manutention étant alors de préférence du type gerbable/emboîtable par rotation autour d'un axe sensiblement perpendiculaire à son fond, et une surface de ladite pièce pourra alors être munie de l'élément rapporté, lequel sera de préférence disposé d'un côté d'un plan contenant ledit axe de rotation et présentera alors une couleur et/ou une forme propre(s) à lui permettre de constituer un repère d'identification et/ou de détrompage utile pour différencier l'orientation de la pièce par rapport à son axe lors des opérations de gerbage et/ou d'emboîtage de celle-ci. Ainsi, l'élément à rapporter pourra servir de moyen d'identification du positionnement d'un bac, ou d'une caisse, gerbable/emboîtable par rotation sur lui-même d'un quantième de tour (quart ou d'un demi tour), l'opérateur chargé de sa manutention pourra identifier facilement dans quel sens la saisir et la disposer sur une autre. Cette solution remplace donc avantageusement le principe de la "bicoloration", ou du détrompeur "mécanique" (excroissance, tige amovible).

L'invention et sa mise en oeuvre apparaîtront encore plus clairement à l'aide de la description qui va suivre, faite en référence aux dessins dans lesquels :

La figure 1 est une vue de coté d'une pièce munie d'un élément rapporté à sa surface.

Les figures 2 et 3 illustrent, vue de face et en coupe, l'élément rapporté sur la pièce représenté sur la figure 1.

Les figures 4 à 5 illustrent le procédé de réalisation de la pièce représentée sur la figure 1.

Par souci de simplification, seul sera illustré le cas de la réalisation, par un procédé de moulage par injection sous pression, d'une caisse 10 de manutention munie en surface (c'est-à-dire sur sa surface externe ou à proximité de celle-ci) d'une unité de traitement électronique de données (laquelle pourra servir ou non de "détrompeur de position").

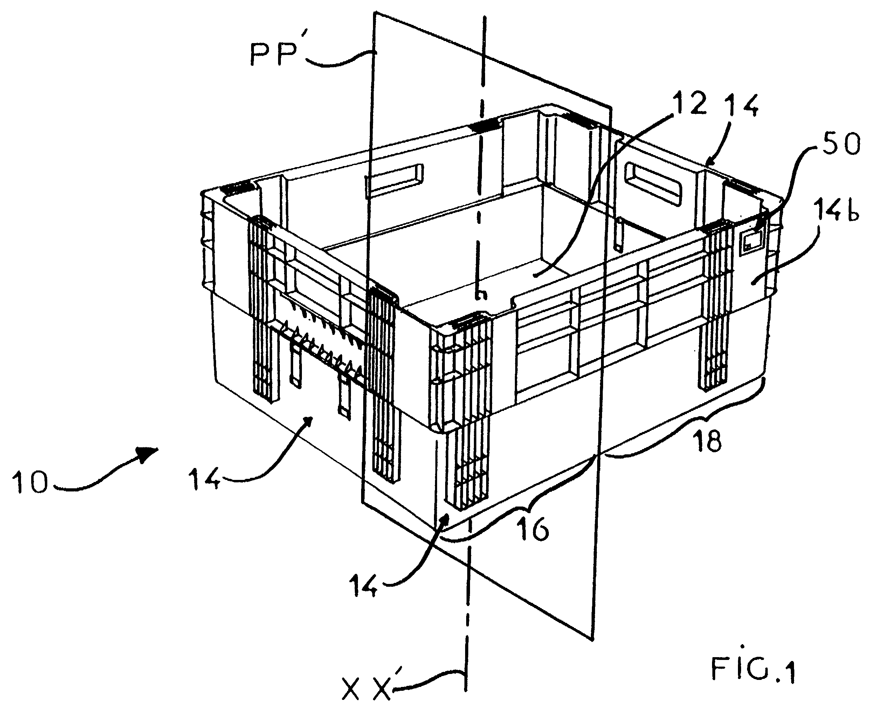

Sur la figure 1, la caisse 10 est du type gerbable/emboîtable par rotation autour d'un axe xx' perpendiculaire à un fond 12 à partir duquel se dressent des parois 14 latérales (typiquement au nombre de quatre), de préférence réalisées d'une seule pièce avec le fond 12 lors de l'opération de moulage. Sur la surface 14b de l'une des parois 14 se trouve un élément 50 rapporté de faible épaisseur (typiquement de l'ordre du dixième de millimètre ou du millimètre), lequel est ici une unité 60 électronique de traitement de données (acquisition et transmission) telle qu'une puce électronique 64 munie d'une mémoire. Dans le cas présent, l'unité électronique 60 est novée dans un fin film 62 en plastique (tel que du polyester), et comprend la puce 64 reliée à une antenne 66 d'émission/réception de données définissant un contour qui suit les bords externes du film 62, par exemple de forme parallélèpipèdique (rectangulaire). L'unité 60 dans son ensemble (film compris) définit ainsi un carré de 28 mm de côté et de moins d'un dixième de millimètre d'épaisseur. L'unité électronique 60 est protégée par un support 70, c'est-à-dire qu'elle est rapportée sur sa surface 72 et disposée entre ledit support 70 et la paroi 14 de la caisse 10, bien qu'elle puisse aussi être noyée à l'intérieur (cette solution étant plus complexe à réaliser). Le support 70 est transparent ou translucide pour permettre de visualiser la puce 64 au travers de celui-ci, par exemple si celle-ci est munie d'un affichage (cristaux liquides).

L'élément 50 à rapporter, ou plus précisément dans notre cas le support 70, est réalisé dans une matière plastique compatible avec celle(s) utilisée(s) pour réaliser la caisse 10 (polyéthylène par exemple), de sorte que lors du moulage, celui-ci (ou son support) s'intègre parfaitement à la paroi 14 de la caisse 10 par soudage (ou fusion si les matières sont identiques) de sa matière plastique avec celle de la pièce 10. Ce support est aussi de faible épaisseur, par exemple de 0,5 à 0,7 millimètre d'épaisseur pour 35 millimètres de côté. L'élément rapporté 50 (la puce 64 sur son support 70) a donc une épaisseur inférieure au millimètre.

On peut noter que l'emplacement de l'unité électronique 60 a peu d'importance de façon générale, dès lors qu'elle peut être lue par un dispositif de lecture adéquat. Cependant, il est préférable de la disposer dans un endroit accessible, sans être trop visible, par exemple sur un pied (pour une caisse palette ou une palette), près d'un bord, ou dans un coin d'une des parois 14 comme cela est représenté. Toutefois, celle-ci peut se trouver aussi bien à l'extérieur qu'à l'intérieur de la caisse dès lors que les données qu'elle peut transmettre ou acquérir peuvent traverser la paroi de ladite pièce, ce qui est en particulier le cas si l'on utilise des ondes radio.

Lorsque l'élément 50 (l'unité électronique 60 dans le cas présent) sert aussi de détrompeur (par sa couleur différente de celle de la pièce et/ou par sa forme) pour son utilisation sur une caisse ou un bac du type emboîtable/gerbable par rotation d'un quart de tour ou d'un demi tour autour d'un axe xx' perpendiculaire à son fond 12, il sera alors préférable de le disposer de telle sorte que l'on puisse différencier deux parties 16/18 (deux moitiés d'une paroi 14 par exemple) de la caisse 10 disposées de part et d'autre d'un plan PP' comprenant l'axe xx', par exemple près d'un bord (ou montant) d'une des parois 14, comme cela est le cas. Ainsi, il sera facile de repérer l'orientation de la caisse 10 par rapport à son axe xx' lors des opérations de gerbage et/ ou d'emboîtage de celle-ci sur une autre.

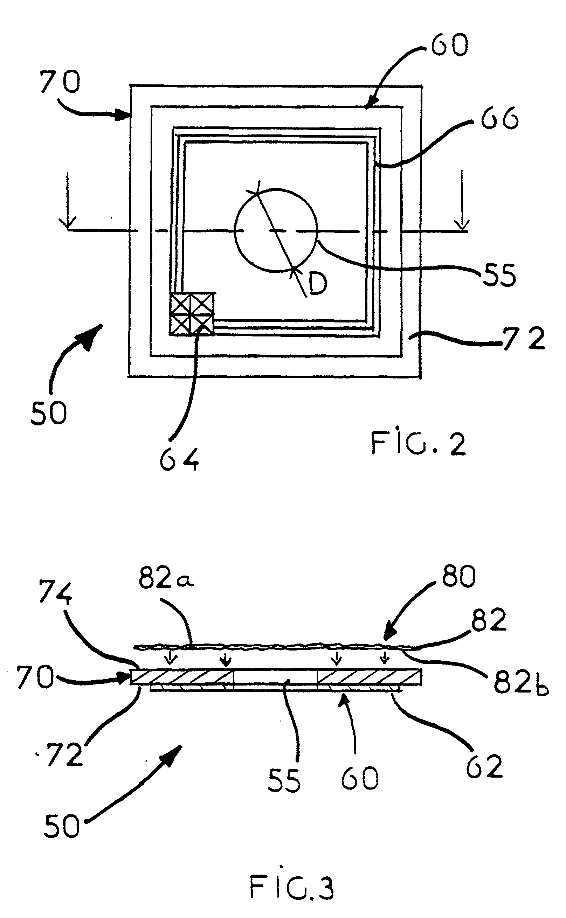

Comme on peut le voir sur les figures 2 et 3, l'élément 50 est muni d'un orifice 55 à travers lequel la matière plastique de la pièce est visible, c'est-à-dire que l'orifice 55 est rempli de ladite matière lors de l'opération de moulage. Cet élément 50 est muni, sur une face 74 de son support 70, d'un moyen intermédiaire 80 de fixation qui est ici un adhésif 82 double face, dont l'utilité va être expliqué dans la partie qui suit.

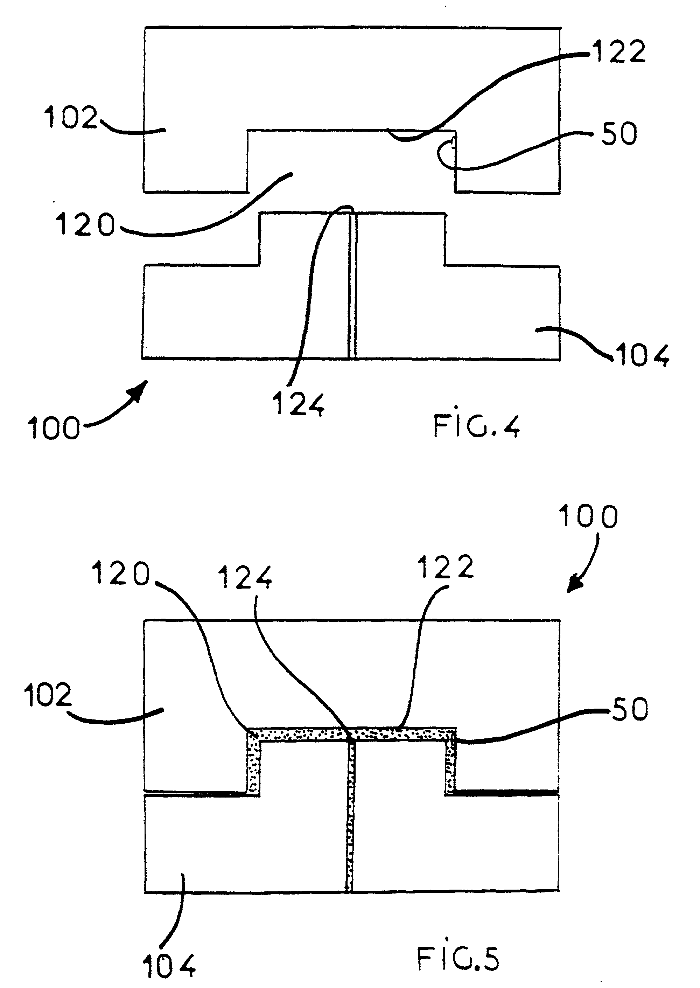

Nous allons maintenant, à l'aide des figures 4 et 5, décrire le procédé de réalisation préféré pour réaliser la pièce de la figure 1.

Sur la figure 4, on voit un moule 100 d'injection dont les deux parties 102/104, lorsqu'elles se rejoignent, définissent une cavité 120 de moulage à paroi 122 périphérique. Ce moule 100 est de type tout à fait conventionnel et ne fait pas partie de l'objet de l'invention. Au moins un orifice d'injection 124 de matière plastique de constitution de la pièce 10 aboutit à l'intérieur de la cavité de moulage et permet l'introduction de ladite matière. Pour cela, il communique par exemple avec une buse d'injection sous pression non représentée.

Dans une première étape illustrée par la figure 4, on voit que les deux parties 102 et 104 du moule 100 sont éloignées. Sur la paroi 122 de la cavité 120 de moulage, à l'endroit exact où l'on veut que l'élément 50 à rapporter (l'unité électronique 60 dans le cas présent) se trouve sur la pièce 10 finie, et de préférence dans une zone éloignée du(des) orifice(s) 124 d'arrivée de la matière plastique de constitution de la pièce 10, une unité électronique 60 de traitement de données rapportée sur un support 70 est disposée et est maintenue en position. On pourra noter qu'en pratique, il sera possible de disposer et de maintenir l'élément 50 à rapporter n'importe où contre la paroi 122 de la cavité 120 de moulage, d'où une grande flexibilité du procédé.

Pour disposer et maintenir l'élément 50 contre la paroi 122, on utilise le moyen intermédiaire 80 de fixation (adhésif 82 double face). L'une des faces 82a de cet adhésif 80 (voir figure 3) sert à fixer l'élément 50 contre la paroi 122 de la cavité 120 de moulage (éventuellement via son support s'il en est muni), tandis que l'autre face 82b sert à fixer ledit adhésif 82 sur une surface de l'élément (dans le cas présent, une surface 74 de son support 70). La force de collage de la face 82b (c'est-à-dire sur la face destinée à venir en contact de l'élément 50) de l'adhésif 82 double face est supérieure à la force de collage de la face 82a (c'est-à-dire la face destinée à venir au contact de la paroi 122 de la cavité 120 de moulage) dudit adhésif 82. On choisira aussi de préférence un adhésif 82 dont la force de collage à la paroi 122 de la cavité 120 de moulage est supérieure à la force de décollement provoquée par le flux de matière plastique lors de son injection. En d'autres termes, le coefficient de frottement entre l'élément 50 et la paroi 122 de la cavité 120 de moulage doit être tel qu'il doit vaincre la force créée par le flux de matière plastique lors de son introduction dans le moule.

Pour empêcher, lors du moulage, la formation de bulles de gaz entre l'élément 50 et la paroi 14 de la pièce 10, on réalise au moins un orifice 55 dans l'épaisseur de l'élément 50 avant de le disposer et le maintenir contre la paroi 122 de la cavité 120 de moulage. Chaque orifice 55 doit être d'un diamètre D suffisamment important pour qu'une partie de la matière plastique de constitution de la pièce vienne le remplir, mais pas trop important pour éviter que cette matière n'emporte l'élément 50 avec elle lors du moulage. Ainsi, on réalisera de préférence un seul orifice 55 situé au centre de l'élément et d'un diamètre compris par exemple entre environ 2 et 12 mm pour un élément 50 de 35 sur 35 mm. Dans le cas où l'élément 50 est une unité électronique 60 de traitement de données rapportée sur un support 70, l'orifice traversera aussi bien le film 62 de l'unité que le support 70. L'intérêt de cet orifice 55 est qu'il facilite aussi le soudage (ou la fusion) des matières plastiques de l'élément 50 et de la pièce 10, et améliore la tenue de l'élément 50 contre la pièce 10. Ainsi, lorsque la matière plastique de constitution de la pièce 10 arrive dans cet orifice, elle le remplit complètement jusqu'à venir contre la paroi 122 de la cavité 120 de moulage, et pousse le gaz qui se trouvait dans cet orifice 55 afin qu'il s'échappe le long de ladite paroi 122.

Une fois l'élément 50 disposé et maintenu contre la paroi de la cavité de moulage à l'aide de son moyen 80 intermédiaire de fixation, il suffit de fermer le moule 100, d'apporter la matière plastique dans la cavité 122 de moulage par une ou plusieurs buses d'injection (figure 5), d'attendre que la pièce 10 refroidisse et que sa matière plastique de constitution durcisse, et de retirer la pièce 10 du moule 100. On notera à ce sujet que le retrait de la pièce 10 entraîne la séparation de la paroi 122 de l'élément 50 rapporté. Lorsque les conditions concernant le moyen intermédiaire 80 de fixation sont bien choisies (force de collage de l'adhésif 82 double face), l'adhésif 82 restera accroché à l'élément 50. Ainsi, le moule 100 sera prêt pour réaliser une autre pièce 10 sans qu'il soit nécessaire de le nettoyer, l'adhésif 82 étant facilement retiré de la pièce 10 une fois celle-ci totalement refroidie.

Ce procédé est donc rapide, très simple à mettre en oeuvre, et il peut être automatisé à l'aide d'un robot positionneur venant saisir un nouvel élément muni d'un moyen intermédiaire de fixation pour le disposer contre la paroi de la cavité de moulage.

Bien évidemment, l'invention n'est nullement limitée au mode de réalisation préférentiel illustré par les figures.

Ainsi, le procédé peut aussi s'appliquer à une poubelle ou tout autre emballage en matière plastique.

De même, le moyen intermédiaire de fixation peut être un aimant venant se fixer contre la paroi de la cavité de moulage.

## Revendications

1. Procédé de moulage pour réaliser une pièce (10) en matière plastique munie sur une surface (14a) d'un élément (50) rapporté au moins en partie en matière plastique compatible avec celle de la pièce (10) pour se souder avec elle lors du moulage, cet élément (50) présentant une faible épaisseur relativement à une au moins de ses autres dimensions, le procédé comprenant les étapes suivantes :
a) on dispose et on maintient l'élément (50) à rapporter en regard d'une zone déterminée de la paroi (122) d'une cavité (120) de moulage pour empêcher qu'il ne se déplace lors du moulage, et on referme le moule (100),
b) on introduit de la matière plastique dans la cavité (120) de moulage pour réaliser la pièce (10), et on conduit le moulage pour souder cette matière plastique de constitution de la pièce avec une partie au moins de celle de l'élément (50) à rapporter,
c) on laisse refroidir la matière plastique à l'intérieur du moule,
d) on démoule la pièce (10) et l'élément (50) rapporté soudé à elle,
**caractérisé en ce que** l'on réalise au moins un orifice (55) dans l'épaisseur de l'élément (50) à rapporter, et on apporte, dans l'étape b), la matière de constitution de la pièce jusque dans cet orifice (55).

2. Procédé selon la revendication 1, **caractérisé en ce que** l'on munit l'élément (50) à rapporter d'un moyen (80) intermédiaire amovible de fixation, propre à venir se fixer sur la paroi (122) de la cavité (120) de moulage et, dans l'étape a), on maintient l'élément (50) sur la paroi (122) de la cavité (120) de moulage à l'aide de ce moyen (80) intermédiaire de fixation que l'on applique contre ladite paroi (122).

3. Procédé selon l'une quelconque des revendications précédentes, **caractérisé en ce que** l'on maintient l'élément (50) à rapporter contre la paroi (122) de la cavité (120) de moulage à l'aide d'un matériau (82) adhésif double face dont la force de collage à l'élément (50) à rapporter est supérieure à la force de collage à la paroi (122) de la cavité (120) de moulage.

4. Procédé selon l'une quelconque des revendications précédentes, **caractérisé en ce que**,
- l'élément (50) à rapporter est une unité (60) électronique de traitement de données noyée dans un support (70) de faible épaisseur par rapport à ses autres dimensions, ou rapportée sur une de ses faces (74), ledit support (70) étant en matière plastique compatible avec celle(s) utilisée(s) pour réaliser la pièce (10), et
- lors de l'étape a), on dispose l'élément (50) ainsi constitué contre la paroi (122) de la cavité (120) de moulage de telle sorte que la face (74) sur laquelle est rapportée l'unité (60) soit dirigée vers l'intérieur de ladite cavité (120).

5. Pièce (10) en matière plastique munie, sur une surface (14b), d'un élément (50) rapporté au moins en partie en matière plastique compatible avec celle de la pièce (10) soudée avec lui, cet élément (50) présentant une faible épaisseur relativement à une au moins de ses autres dimensions, **caractérisée en ce que** l'élément (50) rapporté est pourvu d'au moins un orifice (55) à travers lequel la matière plastique de constitution de ladite pièce (10) est visible.

6. Pièce (10) selon la revendication 5, **caractérisée en ce que** l'élément (50) rapporté comprend une unité électronique (60) de traitement de données noyée à l'intérieur de, ou rapportée sur, une face (72), d'un support (70) en matière plastique transparente ou translucide, compatible avec celle(s) de la pièce, ladite unité (60) étant disposée entre la pièce (10) et le support (70).

7. Pièce (10) selon la revendication 5 ou la revendication 6, **caractérisée en ce que** :
- la pièce (10) est une pièce de manutention comprenant un fond (12) à partir duquel se dressent des parois (14) latérales,
- la pièce de manutention est du type gerbable/emboîtable par rotation autour d'un axe xx' sensiblement perpendiculaire à son fond (12), et
- une surface (14b) de ladite pièce (10) est munie de l'élément (50) rapporté, lequel est disposé d'un côté d'un plan PP' contenant ledit axe xx' de rotation et présente une couleur et/ou une forme propre(s) à lui permettre de constituer un repère d'identification et/ou de détrompage utile pour différencier l'orientation de la pièce (10) par rapport à son axe xx' lors des opérations de gerbage et/ou d'emboîtage de celle-ci.

## Patentansprüche

1. Formverfahren zum Herstellen eines Gegenstands (10) aus Kunststoffmaterial, der auf einer Oberfläche (14a) mit einem Einsatzelement (50) versehen ist, das mindestens teilweise aus Kunststoffmaterial besteht, das mit dem Gegenstand (10) verträglich ist, um sich mit diesem beim Formen fest zu verbinden, wobei das Element (50) relativ zu wenigstens einer seiner weiteren Erstreckungen eine geringe Höhe bietet und wobei das Verfahren die folgenden Schritte umfaßt:
a) man ordnet an und hält das einzusetzende Element (50) gegen einen bestimmten Bereich der Wandung (122) eines Formhohlraums (120) gerichtet, um zu verhindern, daß es sich beim Gießen verlagert, und man verschließt die Form (100) wieder,
b) man führt Kunststoffmaterial in den Formhohlraum (120) zum Herstellen des Gegenstands (10) ein, und man führt das Formen zum Verbinden dieses den Gegenstand ausbildenden Kunststoffmaterials mit mindestens einem Teil desselben des einzusetzenden Elements (50) durch,
c) man läßt das Kunststoffmaterial im Inneren der Form abkühlen,
d) man entformt den Gegenstand (10) und das Einsatzelement (50), das mit jenem verbunden ist,
**dadurch gekennzeichnet, daß** man mindestens eine Öffnung (55) in der Höhenerstreckung des einzusetzenden Elements (50) ausbildet und in Schritt b) das den Gegenstand bildende Material bis in diese Öffnung (55) bringt.

2. Verfahren nach Anspruch 1, **dadurch gekennzeichnet, daß** man das einzusetzende Element mit einem lösbaren Zwischenbefestigungsmittel (80) versieht, das geeignet ist, um an der Wand (122) des Formhohlraums (120) festgesetzt zu werden, und man in Schritt a) das Element (50) mit Hilfe dieses Zwischenbefestigungsmittels (80), das man an besagter Wandung (122) anbringt, an der Wandung (122) des Formhohlraums (120) hält.

3. Verfahren nach einem der vorhergehenden Ansprüche, **dadurch gekennzeichnet, daß** man das einzusetzende Element (50) an der Wandung (122) des Formhohlraums (120) mit Hilfe eines doppelseitigen haftenden Materials (82) hält, dessen Klebekraft gegenüber dem einzusetzenden Element (50) größer als die Klebekraft gegenüber der Wandung (122) des Formhohlraums (120) ist.

4. Verfahren nach einem der vorgehenden Ansprüche, **dadurch gekennzeichnet, daß**
- das einzusetzende Element (50) eine elektronische Datenverarbeitungseinheit (60) ist, die in einen Träger (70) geringer Höhe im Bezug auf seine anderen Erstreckungen eingebettet oder an einer ihrer Flächen (74) getragen ist, wobei der Träger (70) aus Kunststoffmaterial besteht, das mit jenem (jenen) zur Ausbildung des Gegenstands (10) kompatibel ist, und
- man in Schritt a) das so ausgebildete Element (50) an der Wandung (122) des Formhohlraums (120) derart anordnet, daß die Fläche (74), an der die Einheit (60) getragen ist, zum Inneren des Hohlraums (120) hin gerichtet ist.

5. Kunststoffgegenstand (10), der auf einer Oberfläche (14b) mit einem Einsatzelement (50) versehen ist, das mindestens teilweise aus Kunststoffmaterial besteht, das mit dem des mit ihm verbundenen Gegenstands (10) kompatibel ist, wobei dieses Element (50) relativ zu mindestens einer seiner anderen Dimensionen eine geringe Höhe aufweist, **dadurch gekennzeichnet, daß** das Einsatzelement (50) mit mindestens einer Öffnung (55) versehen ist, über die das Kunststoffmaterial zur Ausbildung des besagten Gegenstands (10) sichtbar ist.

6. Gegenstand (10) nach Anspruch 5, **dadurch gekennzeichnet, daß** das Einsatzelement (50) eine elektronische Datenverarbeitungseinheit (60) umfaßt, die im Inneren eines Trägers (70) aus transparentem oder transluzentem Kunststoffmaterial eingebettet oder auf einer Fläche (72) desselben getragen ist, wobei das Material kompatibel mit dem (denen) des Gegenstands ist und wobei jene Einheit (60) zwischen dem Gegenstand (10) und dem Träger (70) angeordnet ist.

7. Gegenstand (10) nach Anspruch 5 oder Anspruch 6, **dadurch gekennzeichnet, daß**
- der Gegenstand (10) ein Lager(haltungs)gegenstand ist, der einen Boden (12) umfaßt, von dem sich Seitenwandungen (14) nach oben erstrecken,
- der Lagerhaltungsgegenstand von der Art ist, die durch Drehung um eine Achse xx' im Wesentlichen senkrecht zu seinem Boden (12) stapelbar/zusammenfügbar ist, und
- eine Oberfläche (14b) dieses Gegenstands (10) mit dem Einsatzelement (50) versehen ist, das auf einer Seite einer Ebene PP' angeordnet ist, die die Rotationsachse xx' enthält, und eine Farbe und/oder eine Form aufweist, die geeignet ist (sind), es eine Markierung für die Identifizierung und/oder Vertauschsicherheit bilden zu lassen, und zwar zum Zweck des Differenzierens der Ausrichtung des Gegenstands (10) in bezug auf seine Achse xx' bei Vorgängen des Stapelns und/oder Zusammensetzen desselben.

## Claims

1. A process for molding a unit (10) made of a plastic material provided, on a surface (14a), with an accessory element (50) at least partially made of a plastic material compatible with the plastic material of the unit (10) for being welded therewith upon molding, the element (50) having a small thickness relative to at least one of its other dimensions, the process comprising the following steps of:
a) disposing and maintaining the accessory element (50) in front of a determined zone of a molding cavity (120), for preventing the element to move during the molding, and closing the mold (100),
b) introducing the plastic material within the molding cavity (120), for manufacturing the unit (10), and going on the molding for welding this plastic material of the unit with at least a portion of the plastic material of the accessory element (50),
c) allowing the plastic material to cool within the mold,
d) removing from the mold the unit (10) and the accessory element (50) welded to the unit,
**characterized in that** at least one hole (55) is provided through the thickness of the element (50), and, during step b), the material for manufacturing the unit is brought in said hole (55).

2. The process according to claim 1, **characterized in that** the element (50) is provided with a detachable, intermediate removing means (80) adapted to be fixed to the wall (122) of the molding cavity (120), and, during step a), the element (50) is maintained on said wall (122) of the molding cavity (120) by means of said detachable, intermediate fixation means (80), which is applied against the wall (122).

3. The process according to anyone of the preceding claims,
**characterized in that** the accessory element (50) is maintained against the wall (122) of the molding cavity (120) by means of a double face adhesive material (82) which adheres more strongly to the element (50) than to the wall (122) of the molding cavity (120).

4. The process according to anyone of the proceeding claims,
**characterized in that**:
- the element (50) is a data processing electronic member (60) embedded within a support (70) having a small thickness relative to its other dimensions, or which is disposed on one of the sides (74) of said support, the support (70) being made of a plastic material which is compatible with the material(s) used for manufacturing the unit (10), and
- during step a), the manufactured element (50) is disposed against the wall (122) of the molding cavity (120), so that the face (74) on which the member (60) is disposed is oriented towards the inside of the cavity (120).

5. A unit (10) made of a plastic material and provided, on a surface (14b), with an accessory element (50) at least partly made of a plastic material compatible with the plastic material of the unit (10) which is welded therewith, the element (50) having a small thickness relative to at least one of its other dimensions, **characterized in that** the element (50) is provided with at least one hole (55) through which the plastic material of said unit (10) can be seen.

6. The unit (10) according to claim 5, **characterized in that** the element (50) comprises a data processing, electronic member (60) embedded within, or disposed on, a face (72) of a support (70) made of a plastic material which is transparent or translucent and compatible with the plastic material(s) of the member, the data processing member (60) being disposed between the unit (10) and the support (70).

7. The unit (10) according to claim 5 or claim 6, **characterized in that**:
- the unit (10) is a handling unit comprising a bottom (12) from which lateral walls (14) are erected,
- the handling unit is adapted to be stacked in a pile together with, or housed in, other compatible handling units, as a function of a rotation round an axis (xx') substantially perpendicular to the bottom (12), and,
- a surface (14b) of the unit (10) is provided with the accessory element (50) which is disposed on one side of a plane (PP') containing said axis of rotation (xx'), said surface having a color and/or a shape adapted for enabling the surface to define a reference mark and/or a mis-positioning mark adapted for marking the difference between the different orientations of the unit (10) with respect to its axis (xx') when it is stacked in a pile or housed in other compatible handling units.
